Europäisches Patentamt

European Patent Office

Office européen des brevets

(19)

(11) Veröffentlichungsnummer: **0 035 701**
A2

## (12) EUROPÄISCHE PATENTANMELDUNG

(21) Anmeldenummer: 81101391.1

(22) Anmeldetag: 26.02.81

(51) Int. Cl.³: **B 01 D 23/00**

(30) Priorität: 01.03.80 DE 3007969

(43) Veröffentlichungstag der Anmeldung:
16.09.81 Patentblatt 81/37

(84) Benannte Vertragsstaaten:
AT BE CH FR GB IT LI LU NL SE

(71) Anmelder: Adler, Norbert
Grasgasse 6
D-8400 Regensburg(DE)

(72) Erfinder: Adler, Norbert
Grasgasse 6
D-8400 Regensburg(DE)

(74) Vertreter: Wasmeier, Alfons, Dipl.-Ing. et al,
Patentanwälte Dipl.-Ing. A.Wasmeier Dipl.-Ing. H.Graf
Postfach 382 Greflingerstrasse 7
DE-8400 Regensburg 1(DE)

(54) Aquarienklärfilter.

(57) Bei einem Aquarienklärfilter wird die Reinigung des durchströmenden Wassers auf biologischem Wege vorgenommen und die Strömung gleichmäßig über den gesamten Querschnitt ohne Saugwirkung geführt, indem der Wasserführungskanal spiralförmig oder wellenförmig ausgebildet wird und das aus dem Aquarium gepumpte, zu reinigende Wasser ausschließlich unter Schwerkrafteinfluß nach abwärts geführt wird. Im Wasserführungskanal sind Einsätze, wie Tubifex-Einsätze, Einsätze für Jungfische oder dergl. vorgesehen, die aufgrund der biologischen Reinigungswirkung ideale Lebensbedingungen vorfinden. Das Klärfilter ist so ausgebildet, daß auf ihm Pflanzenaufsätze verwendbar sind, die in der Form und Größe dem Filtergehäuse entsprechen; die Wurzeln der in den Pflanzen-aufsätzen befindlichen Pflanzen ragen in das das Filter durchströmende Wasser und tragen zur Reinigung bei.

Fig.1

Croydon Printing Company Ltd.

EP 0 035 701 A2

"Aquarienklärfilter"

Die Erfindung bezieht sich auf Aquarienklärfilter zur biologischen Reinigung des durchströmenden Wassers.

Jedes Aquarium benötigt ein Wasserfilter, um das im Aquarium befindliche Wasser regelmäßig zu reinigen und das Aquarium sauber zu halten. Ferner ist üblicherweise ein getrennter Behälter mit Einsätzen für Lebendfutter (Tubifex, Mückenlarven, Wasserflöhe usw.) sowie ein Aufzuchtbehälter für Jungfische erforderlich. Derartige Behälter werden in der Regel in das Aquarium eingesetzt; hierdurch wird jedoch einerseits der im Aquarium vorhandene Platz eingeschränkt und zum anderen wird das Aussehen eines solchen Aquariums mit eingehängtem Behälter als störend empfunden. Bei geschlossenen Filtern (z.B. Eheim-Filtern) sind Einsätze dieser Art überhaupt nicht verwendbar; bei offenen Filtern (Außenfiltern) mit sehr großer Oberfläche können Einsätze für Lebendfutter oder Jungfische eingehängt werden. Die in diesen Behältern befindlichen Lebewesen können wegen der Saugwirkung, die bei diesen Filterarten angewendet wird, nur kurze Zeit dort verbleiben. Beispielsweise kann bei derartigen Filterarten Tubifex überhaupt nicht aufbewahrt werden, da durch die Saugwirkung bereits wenige Faulstellen und deren Ausscheidungen, die unvermeidbar in das Filtermaterial gelangen, das gesamte Aquarienwasser verseuchen.

Aufgabe der Erfindung ist es, ein Klärfilter für Aquarien zu schaffen, bei dem die Strömung gleichmäßig über den gesamten Querschnitt geführt ist und das auf biologischer Basis und ohne Saugwirkung arbeitet, in das ferner Spezialeinsätze zur Aufnahme von Lebendfutter und Jungfischen einsetzbar sind und bei dem Aufsätze zur Aufnahme von Pflanzen verwendbar sind.

Gemäß der Erfindung wird dies dadurch erreicht, daß das Filter als spiralförmig oder wellenförmig ausgebildeter Wasserführungskanal (Klärstraße) ausgebildet ist, durch den das aus dem Aquarium gepumpte, zu reinigende Wasser ohne Saugwirkung unter Schwerkraftwirkung hindurch und durch einen Auslaß am Boden des Kanales nach abwärts geführt wird.

Weitere Merkmale der Erfindung sind Gegenstand der Unteransprüche.

Die wesentlichen Bestandteile des erfindungsgemäßen Aquarienfilters in seiner bevorzugten Ausführungsform sind:

1. Die Klärstraße: Das aus dem Aquarium hochgepumpte und dann durch das Eigengewicht in das Filter gelangende Wasser wird in einem spiralförmigen bzw. wellenförmigen Wasserführungskanal vom Eintrittsende zum am Boden des Kanales befindlichen Austrittsende geleitet; die Kanal-wände sind vorzugsweise einstückig mit dem Filtergehäuse ausgebildet, sie können jedoch auch in Form eines getrennten Bauteiles ausgebildet sein. Beispielsweise hat die Spirale zwei Windungen, die das Wasser im Filter durchläuft, ehe es in der Mitte durch das Ringfilter nach unten abfließt. Der Boden der Klärstraße ist vorzugsweise horizontal ausgebildet, und der Wasserabfluß durch das Ringfilter erfolgt nach Durchlaufen der Klärstraße ausschließlich durch Schwerkraft. Im Falle der wellenförmigen Ausbildung des Kanales sind mehrere Wellungen hintereinander angeordnet, Zufluß und Abfluß liegen dabei an entgegengesetzten Enden der Klärstraße. Am Boden der Klärstraße sammeln sich die aus dem Aquarium abgepumpten, im Wasser befindlichen Schwerstoffe, insbesondere Mulm, der von Zeit zu Zeit durch Reinigen des Filters entfernt werden kann, der aber für in der Klärstraße in Einsätzen befindliches Lebendfutter und dergl. Nahrung bietet. Das Wasser fließt ruhig ohne Pump- oder Saugwirkung durch die Klärstraße des Filters zum Ringfilter. Durch diesen kontinuierlichen und gleichmäßigen Wasserfluß in Spiral- oder Wellenform wird eine gleichmäßige Klärung des Wassers erreicht, ohne daß sich tote Stellen bilden können, in denen der Mulm zu faulen beginnen würde.

2. Das Ringfilter: Es ist am Ende der Klärstraße eingesetzt, und zwar im Falle der Ausführung des Filters als Spiralfilter in der Mitte, bei der Ausführung als Filter mit wellenförmiger Wasserführung am vom Eingang entfernten Ende. Das Ringfilter ist in Form eines die Abflußöffnung versperrenden Filters, z.B. als Pfropfen ausgebildet, so daß das nach Durchlaufen der Klärstraße nach unten abfließende Wasser vollständig durch das Ringfilter strömen muß. Es stellt ein sehr feines Filter dar, das vorzugsweise auf einem höhenverstellbaren Abflußrohr angeordnet ist, durch das das Wasser in das Aquarium oder auf die unterhalb der Klärstraße angeordneten großflächigen Filterschichten tropft. Das Ringfilter ist von oben her leicht zu reinigen und ist so fein, daß Mikroorganismen zurückgehalten werden, die als Nahrung für Lebendfutter und Fische dienen, welche in einem Spezialbehälter in das Klärfilter eingesetzt sind. Durch das höhenverstellbare Abflußrohr wird eine Anpassung an die Höhe des Wasserstandes in der Klärstraße erreicht, damit das gesamte Wasser der Klärstraße durch das Ringfilter fließt. Der äußere Filterkörper besteht aus einem Filtermaterial, z.B. Gaze, einem Flies aus Perlonfäden oder dergl., das die Fremdstoffe abhält. Anstelle eines derartigen Ringfilters kann jedoch auch eine andere Filtervorrichtung verwendet werden, die das an der Abflußöffnung nach unten strömende Wasser reinigt. Die Erfindung arbeitet jedoch auch ohne ein solches Ringfilter.

3. Filterschichten: Unterhalb des Bodens der Klärstraße können Schichten aus feinem Filtermaterial angeordnet sein, die von den aus dem Ringfilter nach unten gelangenden Wasser durchströmt werden. Diese Schichten bestehen z.B. aus Kies, Sand, Kohle, Schaumstoff oder dergl. an sich bekanntem Filtermaterial, die eine zusätzliche Filterung des Wassers ergeben. Diese Filterschichten sind nach unten vorzugsweise durch eine schräge Abflußplatte abgeschlossen, die zum Anreichern des Wassers mit Sauerstoff dient. Am untersten Ende dieser Schichten bzw. am Abfluß aus dem Ringfilter bei Fehlen derartiger Schichten (die für die Arbeitsweise der Erfindung nicht unbedingt erforderlich sind), ist vorzugsweise ein Schlauchanschluß vorgesehen, durch den gefiltertes Wasser an jede Stelle des Aquariums herangeführt werden kann.

Das Aquarienklärfilter nach vorliegender Erfindung filtert das zu klärende Aquarienwasser biologisch wesentlich besser als dies mit herkömmlichen Filtern möglich ist. Durch Verwendung der Klärstraße ist es möglich, das Wasser gleichmäßig zu reinigen, ohne daß sich tote Stellen bilden, in denen Mulm zu faulen beginnen würde. Zwar besitzen auch andere Filter Klärkammern, jedoch werden bei derartigen bekannten Filtern aufgrund der Saugwirkung die Mikrolebewesen in das Filtermaterial gesaugt und durch den Druck getötet; im Anschluß daran verfaulen sie und verunreinigen auf diese Weise das Wasser.

A. Einsätze: Bei dem erfindungsgemäßen Filter (Klärstraße) ist es möglich, in die Strömungsbahn des zu reinigenden Wassers im Filter Einsätze zur Aufnahme von Lebendfutter und/oder Jungfischen zu verwenden, da das im Filter durch die Einsätze fließende Wasser ausschließlich durch Schwerkraftwirkung bewegt wird und damit einwandfreie Bedingungen für das Lebendfutter gewährleistet sind. Diese Einsätze werden auf dem Boden der Klärstraße aufgesetzt oder an den Wandungen der Klärstraße aufgehängt.

a) Tubifex-Einsätze: Sie dienen zur Aufnahme von Tubifex-Lebendfutter. Der Tubifex-Rahmen eines derartigen Einsatzes ist seitlich mit Tubifex-Netz bespannt und weist unten einen auswechselbaren, grobmaschigen Gitterrahmen und darunter einen feinmaschigen Tubifex-Netzrahmen auf. Dieser feinmaschige Netzrahmen ist gegenüber dem grobmaschigen Gitterrahmen verschiebbar, so daß das feinwandige Netz parallel zum Gitterrahmen bewegt und der Gitterrahmen nach unten freigelegt werden kann; dabei können dann die Würmer nach unten aus dem Einsatz austreten und zur Verfütterung entnommen werden. Bekannte Tubifex-Siebe, die nur etwas in Wasser eingehängt sind bzw. unter den tropfenden Wasserhahn gestellt werden, haben den entscheidenden Nachteil, daß die Würmer keine Nahrung aufnehmen, so daß sie nach einiger Zeit ausgehungert sind, absterben und zu faulen beginnen. Bei dem erfindungsgemäßen Tubifex-Einsatz wird dieser Nachteil vollständig beseitigt. Das Tubifex-Netz ist so fein, daß die Würmer nicht durch die Maschen des Netzes

hindurchtreten können. Auf den auswechselbaren Netzrahmen wird etwas Futterbrei gestrichen und eine Kunststoffmatte mit seinen Löchern nach oben auf diesen Futterbrei aufgesetzt. Danach wird der Tubifex-Rahmen in die Klärstraße gestellt und auf die Kunststoffmatte wird eine Portion Tubifex verteilt. Die Würmer schlüpfen in die Löcher des Tubifex-Netzes, können jedoch nicht hindurchtreten, da das Netz als Sperre dient. Das Wasser tropft von oben auf das Tubife-x-Netz und umspült den Einsatz von allen Seiten. Der sich auf das Netz absetzende Mulm dient gleichzeitig als Futter. Die Kunststoffmatte hat gegenüber Sand den entscheidenden Vorteil, daß sie einfach ausgewechselt und gereinigt werden kann. Die Entnahme der Würmer aus dem Einsatz ist sehr einfach, da der Einsatz lediglich zu diesem Zweck etwas höher gehängt wird und das Tubifex-Netz unten je nach Bedarf relativ zum Gitterrahmen zur Seite geschoben wird.

b) Einsätze für Jungfische: Gelochte, in die Klärstraße eingesetzte Einsätze dienen zur Aufbewahrung von Jungfischen bzw. für anderes Lebendfutter. Diese Einsätze sind auf ihrer Oberseite offen, so daß die Jungfische natürliche Lebensbedingungen erhalten. Dies - bedeutet, daß die Seitenwandungen dieser Einsätze über den Wasserspiegel herausragen müssen, damit die Jungfische nicht in das Filter gelangen können. Solche Einsätze haben maschenartige bzw. gitterartige Seitenwandungen, deren Maschen so klein gewählt sind, daß Jungfische nicht hindurchschlüpfen können, während gleichzeitig das zu filternde Wasser ungehindert durch diese Maschen durchströmen kann, so daß diese Einsätze den Wasserfluß durch das Filter nicht oder nur in geringem Umfang beeinflussen. Ein auf dem Filter angeordneter Deckel ermöglicht, daß von oben in die Klärstraße gelochte Halterungen eingesetzt werden können, in denen beispielsweise Sumpfpflanzen gezogen werden. Die Wurzeln dieser Pflanzen bauen schädliche Stoffe, z.B. Nitrate, im Wasser ab und diese Pflanzen gedeihen besonders gut, weil sie in der Klärstraße gleichmäßig umspült werden.

d) Pflanzenaufsätze: Auf die Filterschalen lassen sich Schalen z.B. gleicher Form und Größe aufsetzen, die vorzugsweise der besseren Sicht wegen glasklar ausgeführt sind und die Pflanzen aufnehmen, welche einerseits der Dekoration dienen und andererseits den Reinigungseffekt des Wassers erhöhen. Diese Schalen weisen Öffnungen am Boden auf, durch die die Pflanzenwurzeln nach abwärts in die Filterschale wachsen und dort mit dem in der Filterschale befindlichen, zu reinigenden Wasser in Kontakt kommen. In diese Pflanzenaufsätze können auch kleine Pflanzgefäße eingesetzt werden, um den Pflanzen einen besseren Halt zu geben. Des weiteren können in diesen Pflanzenaufsätzen Tonsteine oder dergl. zur Hydrokultur geeignete Materialien eingefüllt werden.

Das erfindungsgemäße Filter wird auf das Aquarium gestellt, das zu filternde Wasser wird aus dem Aquarium über eine Pumpe in das Filter eingeleitet, nach dem Schwerkraftprinzip durch die Klärstraße hindurchgeführt, fließt durch das Ringfilter und schließlich über die darunterliegenden Filterschichten wieder in das Aquarium zurück. Auf diese Weise wird eine einwandfreie biologische Filterung des Wassers erzielt, und es ist entscheidend, daß keine Sogwirkung innerhalb des Filters auftritt, die sich schädlich auf den Mikroorganismus wie auch auf die in den Einsätzen befindlichen Lebewesen, z.B. Lebendfutter und Jungfische, auswirken kann.

Mit dem erfindungsgemäßen Filter läßt sich ein biologischer Kreislauf im Aquarium aufrechterhalten. In einer Fließstrecke setzt sich der Mulm ab, der von Mikroorganismen abgebaut wird. Die geringe Wassertiefe in der Spirale und die ständige Bewegung reichern das Wasser mit Sauerstoff an, so daß ideale Bedingungen für die Mikrolebewesen gegeben sind. Das Wasser durchfließt ohne Druck oder Sog ausschließlich durch Schwerkraft den Filter und die Mikroorganismen und Bakterien werden nicht geschädigt, wie dies bei Verwendung von mit Pumpen betriebenen Saugfiltern der Fall ist.

Bei starkem Schmutzanfall bzw. bei Großaquarien lassen sich zwei oder mehr Spiralen einfach übereinandersetzen. Durch Bepflanzen werden Uferbiotope nachgebildet. Die Pflanzen in dem Spiralfilter entziehen dem Wasser zusätzlich Stickstoff; ein Wasserwechsel ist nur noch selten notwendig. Das reiche Infusorienleben in der Filterspirale ist ideal zur Aufzucht von Jungfischen. Des weiteren bleiben in der Filterspirale Tubifex unbegrenzte Zeit frisch. Sie werden ähnlich den im natürlichen Bach herrschenden Bedingungen von sauerstoffreichem Wasser umströmt, mit Nahrung versorgt und wachsen zu beachtlicher Größe heran. Durch die Verwendung einer Pflanzschale als Aufsatz auf das Aquarienfilter läßt sich die Filterschale attraktiv verkleiden und die von der Pflanzschale in das Filter stehenden Pflanzenwurzeln tragen gleichzeitig zur Erhöhung des Reingiungseffektes des durchströmenden Wassers bei.

Nachstehend wird die Erfindung in Verbindung mit der Zeichnung anhand eines Ausführungsbeispieles erläutert. Es zeigen:

Fig. 1 eine Aufsicht auf ein Filter gemäß der Erfindung in schematischer Darstellung mit spiralförmiger Wasserführung,

Fig. 2 eine Aufsicht auf eine weitere Ausführungsform eines Filters gemäß der Erfindung in schematischer Darstellung, mit wellenförmiger Wasserführung,

Fig. 3 eine Schnittansicht der Darstellung nach Fig. 1 längs der Linie I-I, in etwas vergrößerter Darstellung,

Fig. 4 eine weitere schematische Schnittansicht des erfindungsgemäßen Filters mit Einsätzen,

Fig. 5 eine Teilschnittansicht eines Tubifex-Einsatzes in einer Betriebsposition,

Fig. 6 eine Teilschnittansicht eines Tubifex-Einsatzes in der entgegengesetzten Betriebsposition,

Fig. 7 eine schematische, perspektivische Darstellung eines Tubifex-Einsatzes, und

Fig. 8  eine schematische Schnittansicht einer auf die Filterschale aufgesetzten Pflanzschale.

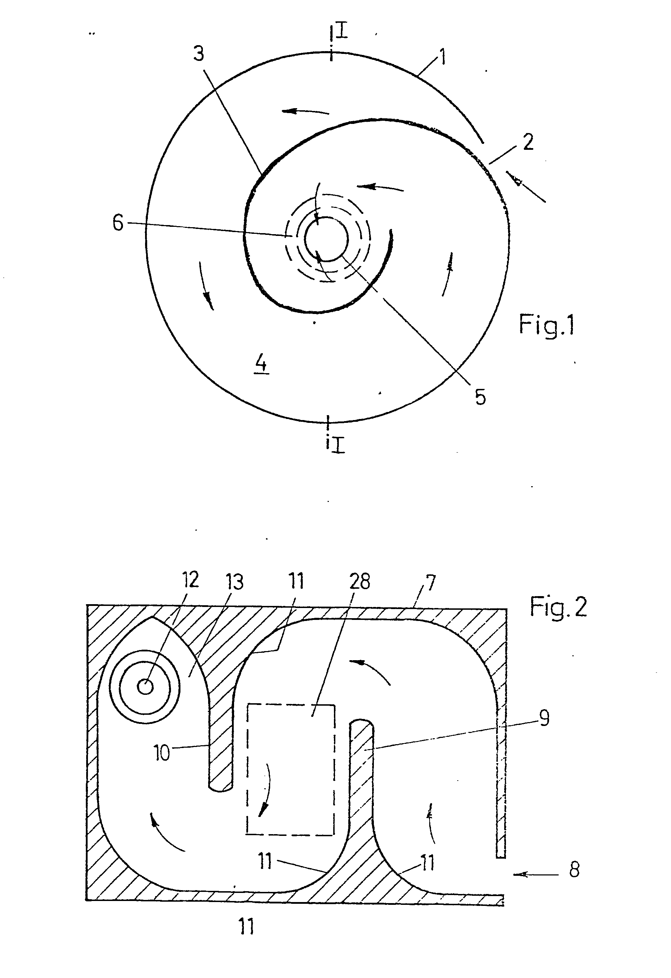

Das erfindungsgemäße Filter ist in Fig. 1 mit spiralförmiger
Wasserführung dargestellt. Das Filtergehäuse 1 besitzt einen
Wassereinlauf 2 und eine spiralförmig geführte Innenwand 3, so
daß zwischen der Gehäuseaußenwand 1 und der spiralförmigen Innenwand 3 ein Wasserfluß in Pfeilrichtung entsteht. Der Wasserführungskanal bzw. die Klärstraße ist mit 4 bezeichnet. In der Mitte
des Filters 1 ist eine Öffnung 5 vorgesehen, die den Abfluß für
das gereinigte Wasser bildet. Mit 6 ist ein die Öffnung 5 konzentrisch umgebendes Ringfilter bezeichnet.

Die abgeänderte Ausführungsform nach Fig. 2 besteht aus einem im
Grundriß rechteckförmigen Filtergehäuse 7 mit Einlauf 8 sowie
Innenwänden 9, 10, die abwechselnd versetzt auf einander gegenüberliegenden Seiten offen sind, und deren Übergänge zu den Gehäusewänden 7 gerundet (bei 11) sind, so daß ein wellenförmiger
Wasserstrom (in Pfeilrichtung) zum Abfluß 12 gewährleistet ist.
Der Abfluß ist wiederum von einem Ringfilter 13 umgeben.

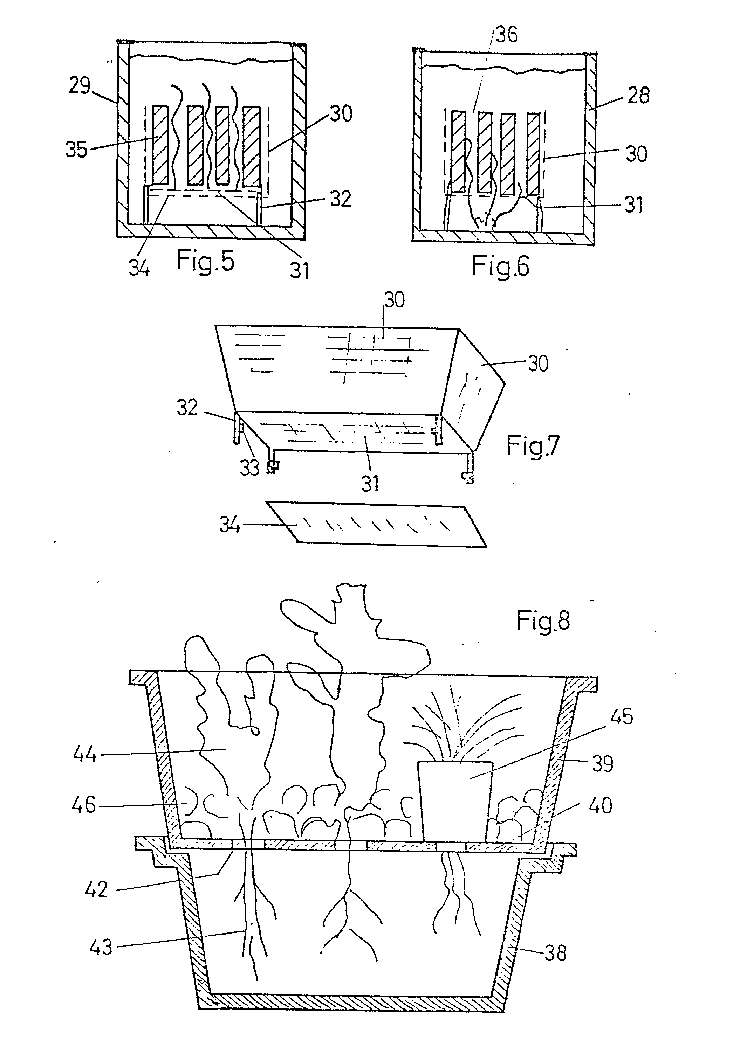

Die Wirkungsweise des erfindungsgemäßen Filters ergibt sich am
besten aus der Darstellung nach Fig. 3. Aus dem schematisch angedeuteten Aquarium 14 wird das zu reinigende Wasser mit Hilfe einer
nichtdargestellten Umlaufpumpe über das Rohr 15 in das Filter 16
bzw. dessen Klärstraße eingeführt, wo es eine bestimmte Füllhöhe
einnimmt. Im Boden 17 des Filters ist eine Abflußöffnung 5 bzw.
12 vorgesehen, wie in den Figuren 1 und 2 dargestellt. Über dieser
Öffnung wird das Ringfilter 6 bzw. 13 angeordnet, das aus einem
äußeren Körper 18 aus Gaze oder dergl. Material aus einem Flies
aus Perlonfäden oder dergl. besteht, dessen Inneres ein höhenverstelbares Abflußrohr 19 besitzt, das mehrere teleskopartig aneinander verschiebbare, miteinander verbundene Einzelabschnitte
aufweisen kann. Das aus der Öffnung 5 bzw. 14 nach unten austretende Wasser gelangt in einen Behälter 20, der vorzugsweise mit
dem darüberliegenden Filter 16 zu einer Einheit verbunden ist

BAD ORIGINA

bzw. mittels Halterungen 21 lösbar mit ihm befestigt ist. In dem Behälter 20 sind ein oder mehrere Filterschichten 22 aus Sand, Kies, Kohle, Schaumstoff oder dergl. vorgesehen, die eine weitere Filterung des im Filter 16 gereinigten Wassers ergeben. Zweckmäßigerweise ist der Boden des Behälters 20 geneigt ausgebildet, indem z.B. an der höhergelegenen Stelle des Bodens an den Behälter 21 Füße 24 angeformt ist. An der tiefsten Stelle des Bodens 23 ist die Abflußöffnung 25 vorgesehen, an die ein Schlauch angeschlossen sein kann, über den das gereinigte Wasser in das Aquarium 14 abgelassen und dort beliebig verteilt werden kann.

Das Filter 16 ist beispielsweise mit einem Deckel 26 nach oben abgedeckt, der Aussparungen aufweist, durch die z.B. ein gelochtes Pflanzgefäß 27 für Sumpfpflanzen eingesetzt werden kann. Auf dem Boden des Filters oder an dem Deckel 26 bzw. bei nicht vorhandenem Deckel an den Seitenwänden des Filters 16 sind Einsätze 28, 29 aufgestellt bzw. aufgehängt. Die Einsätze 28 sind in Form von Tubifex-Einsätzen ausgebildet, während der Einsatz 29 zur Aufnahme von Lebendfischen bestimmt ist. Wie im einzelnen in den Figuren 5 bis 7 dargestellt, ist der Tubifex-Einsatz 28 ein oben offener Behälter, dessen Seitenwandungen 30, 30' mit feinmaschigem Tubifex-Netz bespannt sind, so daß zwar das zu klärende Wasser durch diesen Einsatz hindurchströmen kann, die im Einsatz vorhandenen Würmer jedoch nicht durch das feinmaschige Netz nach außen gelangen können. Der Boden 31 des Einsatzes 28 ist ein grobmaschiges Gitter, wobei die Maschenweite so groß gewählt ist, daß die im Einsatz 28 vorhadenen Würmer nach unten austreten können. Am Boden des Einsatzes 28 sind Füße 32 vorgesehen, die im Abstand von der Bodenwand angeformte Leisten 33 oder dergl. aufnehmen, in die ein mit einem feinen Netz besetzter Rahmen 34 eingeschoben werden kann, der den Durchtritt der Würmer durch die Maschen des Gitters 31 verhindert. Der Rahmen 34 kann relativ zum Boden des Einsatzes 28 stufenlos von vollständig verschlossen bis vollständig geöffnet verschoben werden. Fig. 5 zeigt den Boden 31 vollständig durch den Rahmen 34 verdeckt, während Fig. 6 die Arbeitsstellung zeigt, in der der Rahmen 34 vollständig entfernt ist. Der Tubifex-Einsatz 28 weist eine Kunststoffmatte 35 auf, die mit durchgehenden Löchern 36 versehen ist, durch die die Würmer sich nach unten zur Fläche 31 bewegen. Im Falle der Arbeitsposition nach Fig. 6 treten die Würmer durch die Fläche 31 nach unten aus, sammeln sich am Boden des Filters und können zum Verfüttern entnommen werden. Der Einsatz 29 nimmt Jungfische 27 auf, dieser Einsatz ist seitlich und unten aus Gitter hergestellt, dessen Maschenweite kleiner ist als dem Durchmesser der Jungfische entspricht, so daß die Jungfische nicht daraus entweichen können. Die Seitenwandungen des Einsatzes 29 sind nach oben herausgeführt, damit die Fische nicht in den Freiraum des Filters gelangen können, oder es ist der Einsatz 29 mit einem Deckel versehen, der ebenfalls aus entsprechendem Gitter hergestellt ist.

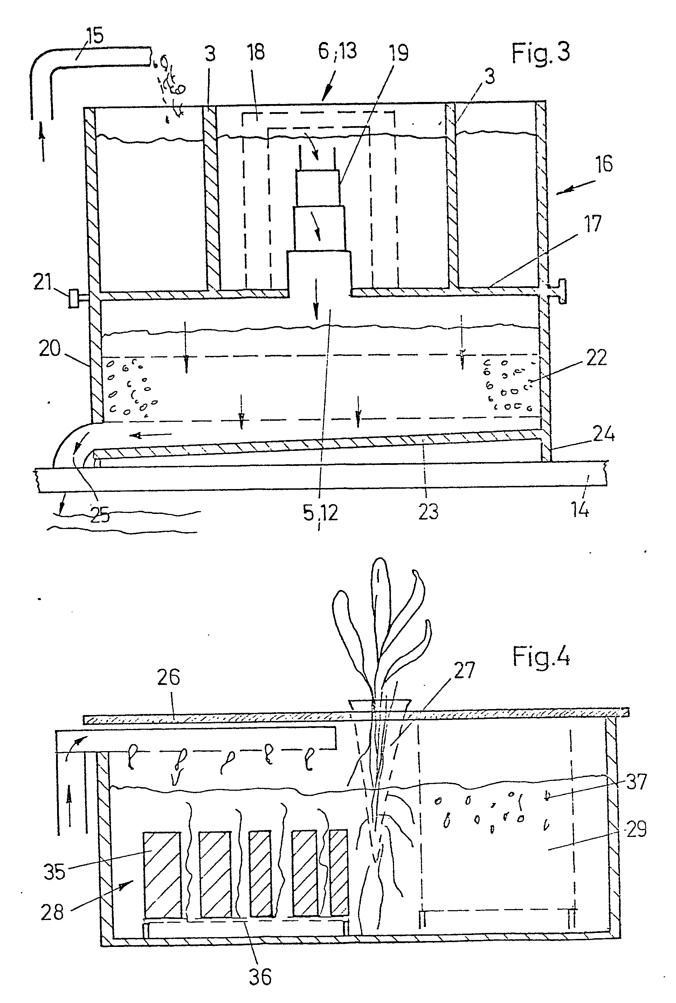

Bei der schematisch dargestellten Ausführungsform nach Fig. 8 ist auf das Gehäuse 38 des Spiralfilters eine Pflanzschale 39 aufgesetzt, deren Boden 40 in einer ringförmigen Aussparung 41 der Filterschale 38 eingesetzt ist und damit einen festen Sitz hat. Die Pflanzschale 39 weist Öffnungen 42 auf, durch die die Wurzeln 43 von Wasserpflanzen 44 nach abwärts in den Spiralfilter stehen, wo diese Wurzeln 43 mit dem zu filternden Wasser in Eingriff kommen. Die in der Pflanzschale 39 befindlichen Wasserpflanzen 44 können auch in Einzeltöpfen 45 eingepflanzt sein, damit sie beispielsweise einen besseren Halt haben. Des weiteren kann die Pflanzschale 39 Tonsteine nach Art der Hydrokulturen aufweisen, damit Feuchtigkeit gespeichert wird.

<u>Patentansprüche:</u>

1. Aquarienklärfilter zur biologischen Reinigung des durchfließenden Wassers, gekennzeichnet durch einen spiralförmig oder wellenförmig ausgebildeten Wasserführungskanal (Klärstraße) (1, 2, 4, 3; 7-12), durch den das aus dem Aquarium gepumpte, zu reinigende Wasser ohne Saugwirkung ausschließlich unter Schwerkrafteinfluß durch eine Abflußöffnung (5; 12) am Boden (4) des Kanales nach abwärts geführt wird.

2. Filter nach Anspruch 1, dadurch gekennzeichnet, daß die Wandungen (1, 3; 7, 9, 10, 11) des Wasserführungskanales einstückig mit der Umfangwandung (1; 7) und dem Boden (4) des Filters ausgebildet ist und aus Kunststoff besteht.

3. Filter nach Anspruch 1, dadurch gekennzeichnet, daß am Ende des Wasserführungskanales ein Ringfilter (6, 13) vorgesehen ist, das von dem gesamten durch das Filter gelangenden Wasser durchflossen ist, das einen Anschluß für den Wasseraustritt aufweist, und das ein höhenverstellbares Abflußrohr (19) besitzt.

4. Filter nach Anspruch 3, dadurch gekennzeichnet, daß der Filterkörper (13) in seinem Inneren aus Gaze, Perlonfäden oder dergl. besteht.

5. Filter nach einem der Ansprüche 1-4, dadurch gekennzeichnet, daß unterhalb des Filters (16) Filterschichten (22) aus Kies, Sand, Kohle, Schaumstoff oder dgl. angeordnet sind, an deren tiefster Stelle eine Abflußöffnung (25) vorgesehen ist.

6. Filter nach Anspruch 1, dadurch gekennzeichnet, daß in dem Wasserführungskanal (1, 2, 3, 4; 7-12) Einsätze (27, 28, 29) angeordnet sind.

7. Filter nach Anspruch 6, dadurch gekennzeichnet, daß die Einsätze (28) Tubifex-Einsätze, die auf dem Boden des Kanales aufgesetzt oder an der Wandung des Kanales aufgehängt sind, und/oder Einsätze (29) für Jungfische, die aus einem engmaschigen Gitternetz bestehen, sind.

8. Filter nach Anspruch 7, dadurch gekennzeichnet, daß die Tubifex-Einsätze (28) in ihrem Inneren eine mit durchgehenden Löchern (36) versehene Kunststoffmatte (35) aufweisen, daß der Boden der Einsätze (28) ein grobmaschiges Gitternetz (31) ist, das mit einem Rahmen (34) mit feinmaschigem Netz verschließbar ist.

9. Filter nach Anspruch 9, dadurch gekennzeichnet, daß die Füße (32) des Tubifex-Einsatzes (28) Ansätze, Leisten oder dergl. (33) aufweisen, in denen der Rahmen (34) verschiebbar ist.

10. Filter nach einem der Ansprüche 1-9, dadurch gekennzeichnet, daß das Filtergehäuse (1; 38) eine ringförmige Aussparung (41) aufweist, in die eine Schale (39) mit ihrem Boden (40) einsetzbar ist, daß der Boden (40) der Schale (39) Öffnungen (42) aufweist, die zur Aufnahme von Wurzeln (43) von in der Schale (39) befindlichen Wasserpflanzen (44) bestimmt sind, und daß das Gehäuse (1; 38) des Filters und Schale (39) zu einer Einheit zusammenfügbar sind, und daß die Neigung der Seitenwandungen des Filtergehäuses (1; 39) und der Schale (39) den gleichen Winkel haben.

Fig.1

Fig.2

Fig.5

Fig.6

Fig.7

Fig.8

Fig. 3

Fig. 4